# EUROPEAN PATENT APPLICATION

(11) **EP 2 128 104 A1**
(43) Date of publication of application: **02.12.2009**
(21) Application number: 08739082.9
(22) Date of filing: 27.03.2008
(51) Int. Cl.: C03C 21/00, C03C 3/064, C03C 3/066, C03C 3/068, C03C 3/072, C03C 3/074, C03C 3/11, G02B 1/00, G02B 3/00

(54) **METHOD FOR PRODUCTION OF DISTRIBUTED REFRACTIVE INDEX-TYPE OPTICAL ELEMENT HAVING ULTRAVIOLET RAY-ABSORBING ABILITY**

(30) Priority: 29.03.2007 JP 2007087533
(71) Applicant: ISUZU GLASS CO., LTD., Osaka-shi, Osaka 557-0063 (JP)
(72) Inventor: SUETSUGU, Tatsuya, Osaka-shi Osaka 557-0063 (JP); KIMURA, Kazuhisa, Osaka-shi Osaka 557-0063 (JP); YAMASHITA, Naoto, Osaka-shi Osaka 557-0063 (JP); TANI, Kunihiko, Osaka-shi Osaka 557-0063 (JP); KAGA, Naoko, Osaka-shi Osaka 557-0063 (JP); EINISHI, Toshihiko, Osaka-shi Osaka 557-0063 (JP); KADONO, Kohei, Kyoto-shi Kyoto 606-8585 (JP)
(74) Representative: Manley, Nicholas Michael
(86) International application number: PCT/JP2008/055953
(87) International publication number: WO 2008/123378

(57) **Abstract**

The present invention provides a method for producing a distributed refractive index-type optical element which can be optically designed readily, enables to provide a desired optical element in a simple manner and has an ultraviolet ray-absorbing ability.

The present invention provides a method for producing a distributed refractive index-type optical element having an ultraviolet ray-absorbing ability, which comprises of the steps of: applying a paste comprising at least one compound selected from the group consisting of a lithium compound, a potassium compound, a rubidium compound, a cesium compound, a silver compound, a copper compound and a thallium compound, an organic resin and an organic solvent onto a glass substrate comprising an alkali metal component and an ultraviolet ray-absorbing component as glass constituent components; and heat-treating the resulting substrate at a temperature lower than the softening point of the glass substrate.

## Description

### TECHNICAL FIELD

The present invention relates to a method for the production of a distributed refractive index-type optical element having an ultraviolet ray-absorbing ability.

### BACKGROUND ART

The optical elements integrated in image information equipment such as cell phones, personal computers and television sets must be designed to block effectively ultraviolet rays, etc. that can damage liquid crystal and other displays. Therefore, ultraviolet filters composed of barrier elements with ultraviolet screening glass and ultraviolet reflective films are incorporated in the optical elements.

These days, size and cost reduction of image information equipment is required more than ever before for both business and domestic purposes, and multi-functional optical elements are being used to realize cost reduction. For instance, an ultraviolet filter with optical properties functions also as a lens.

There are principally two methods for enabling an optical element such as a lens to screen ultraviolet light: 1) a method for producing an optical part using an ultraviolet screening agent and 2) a method for adding the screening function (an ultraviolet screening film, etc.) to an optical element.

Concerning method 1) above, the ultraviolet screening agents described in Patent Documents 1-7 can be used to produce lenses and other optical parts. However, the optical design of these screening agents is difficult since they cause optical path differences due to chromatic aberration. In addition, their manufacturing processes are complicated because the agents need to be polished and ground.

Concerning method 2), for example, a method for providing ultraviolet screening films to an optical element such as a lens through vapor deposition and a technique for immersing an optical part in a melting tub of copper salt (refer to Patent Document 8) can be utilized to give ultraviolet screening layers to the element. However, in the former method a pinhole, for example, prevents effective screening and in the latter the equipment is unsuitable or too costly for producing micro lenses and similar optical parts.
Patent Document 1: Japanese Laid-Open Patent Publication 2005-206434
Patent Document 2: Japanese Laid-Open Patent Publication Hei 4-018501
Patent Document 3: Japanese Laid-Open Patent Publication Hei 4-275942
Patent Document 4: Japanese Laid-Open Patent Publication Hei 5-105865
Patent Document 5: Japanese Laid-Open Patent Publication Hei 5-201746
Patent Document 6: Japanese Laid-Open Patent Publication Hei 6-024794
Patent Document 7: Japanese Laid-Open Patent Publication Hel 7-048140
Patent Document 8: Japanese Laid-Open Patent Publication Hei 8-337433

### DISCLOSURE OF THE INVENTION

### Problems to be Solved by the Invention

The purpose of the present invention is to provide a method for producing a distributed refractive index-type optical element which can be optically designed readily, enables to provide a desired optical element in a simple manner and has an ultraviolet ray-absorbing ability.

### Means for Solving Problems

The inventor has completed the present invention after finding out as a result of a great deal of vigorous research that the above purpose can be achieved based on a production method for forming an area with a different refractive index in a glass substrate containing ultraviolet ray-absorbing components after diffusing in the substrate an Li⁺ ion, a K⁺ ion, an Rb⁺ ion, a Cs⁺ ion, an Ag⁺ ion, a Cu⁺ ion, Tl⁺ ion or other ion by applying on the substrate a special paste comprising at least one compound selected from the group consisting of a lithium compound, a potassium compound, a rubidium compound, a cesium compound, a silver compound, a copper compound and a thallium compound.

Thus, the present invention relates to the following methods for producing a distributed refractive index-type optical element.
1. A method for producing a distributed refractive index-type optical element having an ultraviolet ray-absorbing ability, which comprises the steps of: applying a paste comprising at least one compound selected from the group consisting of a lithium compound, a potassium compound, a rubidium compound, a cesium compound, a silver compound, a copper compound and a thallium compound, an organic resin and an organic solvent onto a glass substrate comprising an alkali metal component and an ultraviolet ray-absorbing component as glass constituent components; and heat-treating the resulting substrate at a temperature lower than the softening point of the glass substrate.
2. A production method, according to 1, wherein the said glass substrate contains as the said ultraviolet ray-absorbing component(s) 0.01 weight % or more of at least one substance selected from the group consisting of a cerium ion, a titanium ion, chalcogenide cadmium, chalcogenide zinc, copper halide and silver.
3. A production method, according to 1, wherein the said glass substrate is silicate glass, borosilicate glass, phosphate glass or fluorophosphate glass which contains 2 weight % or more of the said alkali metal component on an oxide basis and 0.05 weight % or more of at least one substance selected from the group consisting of a cerium ion, a titanium ion, chalcogenide cadmium, chalcogenide zinc, copper halide and silver.
4. A production method, according to 1, wherein the said glass substrate comprises SiO₂: 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance chosen from the group made up of MgO, CaO, SrO. BaO and ZnO: 1-15 weight %, at least one substance selected from the group comprising PbO, Nb₂O₅, ZrO₂, La₂O₃, Y₂O₃, Ta₂O₃ and Gd₂O₃: 10 weight % or less, Sb₂O₃ and/or As₂O₃: 5 weight % or less, SnO₂: 5 weight % or less, copper halide(I): 0.01-10 weight % and silver: 1 weight % or less as a metal mass.
5. A production method, according to 1, wherein the said glass substrate consists of SiO₂= 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance selected from the group comprising MgO, CaO, SrO, BaO and ZnO: 1-15 weight %, at least one substance chosen from the group consisting of PbO, Nb₂O₅, ZrO₂, La₂O₃. Y₂O₂, Ta₂O₃ and Gd₂O₃: 10 weight % or less, Sb₂O₃ and/or As₂O₃: 5 weight % or less, SnO₂: 5 weight % or less, CuBr: 0.005-7 weight % and CuI: 0.005-7 weight %, provided that the total weight percent of CuBr and CuI is 0.01-10, and silver: 1 weight % or less as a metal mass.
6. A distributed refractive index-type optical element having an ultraviolet ray-absorbing ability, which is provided by any of the methods described in 1-5 above.
7. A distributed refractive index-type optical element having an ultraviolet ray-absorbing ability, according to 6, which is used for liquid crystal protection or light concentration.

Furthermore, a distributed refractive index-type optical element in the present invention is an element such as a distributed refractive index lens or lens array, an optical waveguide and a diffraction grating, which has at least an area with a different refractive index (including a continuously-changing refractive index) and causes optical properties by means of the difference in the refractive index. The present invention is described in detail below.

The production method according to the present invention uses a glass substrate containing an alkali metal component and an ultraviolet ray-absorbing component as glass constituent components.

For instance, Li, Na, K, Rb, Cs or other substance can be used as an alkali metal component of the glass substrate, and Li, Na and K are more desirable and Na is the most desirable. Each of these alkali metal components can exist in the glass substrate in the state of an ion or an oxide. Only one of these components may be used in the glass substrate, and two or more of them may be used simultaneously in there.

The quantity of alkali metal components contained in the glass substrate is appropriately 2 weight % or more, preferably 5 weight % or more, more preferably 10 weight % or more, on an oxide basis. Although the upper limit of such quantity is not specifically set, but on an oxide basis it is appropriately around 40 weight %, desirably around 30 weight %, more desirably about 20 weight %.

Ultraviolet ray-absorbing components in the glass substrate are, for instance, a cerium ion, a titanium ion, chalcogenide cadmium, chalcogenide zinc, copper halide and silver. These components are in the state of ions or fine particles. Among them, chalcogenide cadmium, chalcogenide zinc, copper halide and silver are more preferable, and copper halide and silver are the best. Only one of these components may be used in the glass substrate, and two or more of them may be in simultaneous use.

The quantity of ultraviolet ray-absorbing components contained in the glass substrate is appropriately around 0.01 weight % or more, desirably around 0.05 weight % or more. The quantity of each component contained is determined based on its ion weight (ion abundance) in case of an ion, on its own weight concerning a compound (chalcogenide cadmium) and on its metal mass regarding silver. Though the upper limit of such quantity is not specifically set, but it is appropriately around 10 weight %, desirably around 5 weight %.

In the present invention, any glass substrate containing an alkali metal component and an ultraviolet ray-absorbing component, such as silicate glass, borosilicate glass, phosphate glass and fluorophosphate glass, can be used without restrictions.

The composition of glass is not particularly limited. Silicate glass, borosilicate glass, phosphate glass, fluorophosphate glass or any other glass whose composition is generally known can be selected for use, as long as it contains one or more of the said alkali metal components and one or more of the said ultraviolet ray-absorbing components.

Two examples of the compositions are:
1) Borosilicate glass comprising SiO₂: 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance chosen from the group made up of MgO, CaO, SrO, BaO and ZnO: 1-15 weight %, at least one substance selected from the group comprising PbO, Nb₂O₅, ZrO₂, La₂O_{3,} Y₂O₃, Ta₂O₃ and Gd₂O₃: 10 weight % or less, Sb₂O₃ and/or As₂O₃: 5 weight % or less, SnO₂: 5 weight % or less, copper halide(I): 0.01-10 weight % and silver: 1 weight % or less as a metal mass; and
2) Borosilicate glass made up of SiO₂: 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance selected from the group comprising MgO, CaO, SrO, BaO and ZnO: 1-15 weight %, at least one substance chosen from the group consisting of PbO, Nb₂O₅, ZrO₂, La₂O₃, Y₂O₃, Ta₂O₃ and Gd₂O₃: 10 weight % or less, Sb₂O₃ and/or As₂O₃: 5 weight % or less, SnO₂: 5 weight % or less, CuBr: 0.005-7 weight % and CuI: 0.005-7 weight %, provided that the total weight percent of CuBr and CuI is 0.01-10 weight %, and silver: 1 weight % or less as a metal mass.

The configuration of a glass substrate is not particularly restricted, and the substrate may in the configuration of a board, column, rectangular column, etc. depending on the purpose of an end product such as a lens, lens array, optical waveguide or diffraction grating. A desired configuration is obtained, for instance, by grinding a lump of glass having either of the above-mentioned compositions or by molding and, as necessary, grinding a glass melt comprising either of the compositions.

In a production method based on the present invention, a paste containing at least one compound selected from the group of a lithium compound, a potassium compound, a rubidium compound, a cesium compound, a silver compound, a copper compound and a thallium compound is applied onto a glass substrate comprising the said alkali metal component(s) and ultraviolet ray-absorbing component(s) as glass constituent components and after that the resulting substrate is heat-treated at a temperature lower than the softening point of the glass substrate. Any of these compounds is hereinafter referred to as a metal compound as necessary.

A paste is obtained and used by diffusing at least one compound selected from the group of a lithium compound, a potassium compound, a rubidium compound, a cesium compound, a silver compound, a copper compound and a thallium compound and an organic resin over an organic solvent. The paste is not particularly specified, provided that it has an appropriate degree of viscosity for application to a glass substrate and that it contains one or more kinds of the said metal compounds and diffuses a lithium ion, a potassium ion, a rubidium ion, a cesium ion, a silver ion, a copper ion and/or a thallium ion. The viscosity of the paste should be determined as necessary considering the application method, the paste composition, the condition for diffusion over a glass substrate and other conditions.

This paste is applied on a glass substrate and the resulting substrate is heat-treated. After that, one or more kinds of metal compounds contained in the paste replace alkaline components in the glass substrate and spread out as an Li⁺ ion, a K⁺ ion, an Rb⁺ ion, a Cs⁺ ion, an Ag⁺ ion, a Cu⁺ ion, Tl⁺ ion and/or other ion in the substrate. As a result, an area with a different refractive index from that of the substrate is formed and the refractive index is continuously distributed with the change of the diffusion concentration. Particularly, the diffusion of an Ag⁺ ion and/ or Tl⁺ ion allows a wide adjustable range of the refractive index, resulting in a desired refractive index distribution. Any ionic metal compound can be used in the paste as long as its metal ion can be diffused over a glass substrate, but the use of inorganic salt is especially desirable. The examples of each said metal compound are listed below.

Lithium compounds are, for instance, LiNO₃. LiCl, LiBr, LiI, LiF, and Li₂SO₄, and among them LiNO₃ and Li₂SO₄ are most desirable.

Potassium compounds are, for example, KNO₃, KCl, KBr, KI, KF, and K₂SO₄, and among them KNO₃ and K₂SO₄ are most desirable.

Rubidium compounds are, for instance, RbNO₃, RbCl, RbBr, RbI, RbF and Rb₂SO₄. and RbNO₃ and Rb₂SO₄ are most preferable.

Cesium compounds are C_{S}NO₃, CsCl, CsBr, CsI, CsF, CS₂SO₄, etc., and CsNO₃ and CS₂SO₄ are most desirable.

Kinds of silver compounds are AgNO₃, AgCl, AgBr, AgI, AgF, Ag₂S, Ag₂SO₄, Ag₂O etc., and AgNO₃ is most preferable.

Copper compounds are CuSO₄, CuCl, CuCl₂, CuBr, CuBr₂, Cu₂O, CuO, Cu(NO₃)₂, CuS, CuI, CuI₂, Cu(NO₃)·3H₂O, etc., and CuSO₄ and Cu(NO₃) ₂ are the best.

Kinds of thallium compounds are TINO₃, TICl, TIBr, TII, TlF, Tl₂S, Tl₂SO₄, Tl₂O, etc., and among them TlNO₃ is the best.

Only one kind of each metal component may be used, and two or more kinds can be mixed together.

Any organic resin can be contained in the paste as long as it is dissolved at a heat-treating temperature, and cellulose resin, methyl cellulose resin, acetyl cellulose resin, cellulose nitrate resin, acetyl cellulose butyrate resin, acrylic resin, petroleum resin and other resin, which can be easily washed away with water, are recommendable. Only one of these resins may be used and two or more of them can be mixed.

Preferably, an organic solvent used in the paste can diffuse metal compounds and organic resins easily and vaporize quickly when it is dry. To be more specific, it is desirable that the solvent is a liquid at a room temperature (20°C) and vaporizes at a temperature of about 50-200°C. For instance, alcohol such as methanol and ethanol, dimethyl ether or ketone such as acetone is recommendable.

The quantities of components contained in the paste are not precisely specified, but desirably the paste comprises 100 parts by weight of one or more metal compounds, 10-35 parts, preferably 12-30 parts, by weight of an organic solvent and 25-55 parts, preferably 30-45 parts, by weight of one or more resins.

An additive can be mixed in the paste as the case may be. An additive such as Na₂SO4, NaNO₃, NaCl, NaBr and NaI can be used to lower the melting point of the paste, and the use of Na₂SO₄ and/or NaNO₃ is especially recommendable. The amount of an additive mixed is not exactly specified, but the additive should be composed of 200 parts or less, preferably 180 parts or less, by weight per 100 parts by weight of one or more metal compounds.

The composition of the paste including an additive may be determined according to the properties of an end product. In one preferred example, the paste comprises 100 parts by weight of a potassium, rubidium or cesium compound, 2-25 parts, preferably 5-20 parts, by weight of an organic solvent, 15-45 parts, desirably 20-40 parts, by weight of one or more resins and 3 parts or less by weight of an additive, particularly when KNO₃ as a potassium compound, RbNO₃ as a rubidium compound or CsNO₃ as a cesium compound is used. In another preferred instance, the composition comprises 100 parts by weight of a silver or thallium compound, 15-45 parts, preferably 20-40 parts, by weight of an organic solvent, 50-170 parts, desirably 70-150 parts, by weight of one or more resins and 180 parts or less, preferably 160 parts or less by weight of an additive, particularly when AgNO₃ as a silver compound or TlNO₃ as a thallium compound is used.

In a production method of the present invention, the paste is applied onto a glass substrate. The configuration of the paste applied is not particularly restricted and may be determined depending on the properties of each optical element. When a distributed refractive index lens is produced, for example, the paste may be applied onto a desired portion of a substrate in a desired shape for use as a lens. More specifically, if the paste is applied in circles, the radius is typically 5µm-1mm, desirably 10µm-0.5mm. On the other hand, when a lens array is produced, the patterning interval, the size of a circle or dot and other factors may be adjusted according to a desired lens pattern. The patterning interval is not specified, but it is usually 1 cm or less, desirably 500pm, more desirably 250µm.

The application method is not exactly defined, either, and any method generally known such as spin coating, spray coating and dip coating may be used. When a distributed refractive index micro lens (micro lens) is produced, the paste may be dropped onto a glass substrate through an injector, a printing technology for precisely forming small circular dots (for instance, printing by an inkjet method) and other means.

When an optical waveguide or a diffraction grating is produced, the paste may be linearly patterned be means of screening of dies (screen printing), etc. In case of linear patterning, the linear width is determined according to the specified properties of an optical element (an optical waveguide, diffraction grating, etc.). The linear width for an optical waveguide is typically 100µm or less, desirably 50µm or less, more desirably 30µm or less, and the width for a diffraction grating is usually 500µm or less, preferably 200µm or less, more preferably 100µm or less. For more precise patterning, the surface of a glass substrate is patterned with inorganic films by means of a photolithography technology, and after that the paste containing a metal compound is applied onto the exposed portion of the substrate.

As an embodiment of producing an optical waveguide, a process for forming a channel type optical waveguide, which comprises the steps of patterning the surface of a glass substrate with inorganic films using a photolithography technology, applying the paste containing a metal compound onto the exposed portion of the substrate and heat-treating the resulting substrate, is briefly described below.

First, an inorganic film is generated on a glass substrate by depositing a metal such as Al, Ti and Ag and an oxide such as SiO₂ thereon. The thickness of the deposited inorganic film is not particularly restricted, but it is preferably 0.25-1µm, more desirably 0.25-0.5µm. After the film is deposited, a photoresist agent is applied onto the substrate. Any commercially available photoresist agent is all right. A method for applying the agent is not particularly limited and spin coating, spray coating, dip coating and other appropriate method may be used. Next, a patterned metal plate is placed over the applied photoresist agent and after being exposed to ultraviolet rays and developed a photoresist agent's pattern is generated. Then by peeling the inorganic film on the exposed portion of the substrate in accordance with the agent's pattern through etching and other means and removing the agent, a patterned inorganic film is formed on the surface of the substrate. Finally, the paste containing a metal compound is applied onto the patterned inorganic film on the exposed portion of the substrate and the resulting substrate is heat-treated (the conditions for heat-treating are described later), thereby producing a channel type optical waveguide.

In another embodiment, a slab type optical waveguide can be produced by applying the paste all over a glass substrate and heat-treating the resulting substrate.

Concerning any of the above-mentioned methods of applying the paste, the application thickness is not accurately specified and may be determined depending on the kind of a metal compound contained, its quantity and other parameter. However, the application thickness is generally 2mm or less, desirably 1.5mm or less, more desirably 1mm or less.

The paste-applied film is usually dried prior to heat-treating. The drying conditions are not particularly restricted, but the solvent must be sufficiently removed and the paste must be dried enough. The paste should be dried at a temperature of 100-250°C for 30 minutes to one and half hours, preferably at a temperature of 150-200°C for about 45 minutes to one hour.

Then, the dried film is heat-treated. The heat-treating temperature must be lower than the softening point of the glass substrate, and it is generally around 250-600°C, desirably about 300-550°C. The heat-treating time depends on the temperature, but it is typically 10 minutes to 100 hours, preferably about 30 minutes to 25 hours, more preferably around 1-25 hours. The heat-treating environment is not particularly specified, if only it is an oxygen-containing environment in the air, etc.

After the film is heat-treated in the above-mentioned manner, one or more specified metal ions are diffused in the glass substrate. The diffused metal ion exists in the state of an ion, metal oxide or fine metal particle depending on heat-treating conditions, and the refractive index of an ion-diffused portion is different from that of a portion of the substrate. The refractive index distribution is continuous, and the index of the paste-applied substrate surface is usually the highest and the deeper the diffusion is, the lower the index. When the paste is applied in circles, for instance, the index gets lower continuously from the circle center in the direction of the radius. In this way, the different refractive index distribution from that of the substrate and the formation of an area with a refractive index distribution can realize an element structure with specified optical properties.

After heat-treating, as a rule, the substrate is left to be cooled to a room temperature, and then paste residues thereon are washed away with water.

The above-described process produces a distributed refractive index-type optical element having an ultraviolet ray-absorbing ability. If the resulting optical element is a lens or lens array, it is suitable particularly for light concentration. Furthermore, an optical element produced by the present invention, which has an ultraviolet ray-absorbing ability, can be incorporated in image information equipment as a desired ultraviolet filter for protecting liquid crystal. Of course, a production method of the present invention is useful for the production of not only the said optical element but also an element utilizing optically the function of the change or distribution of a refractive index, with which a glass substrate is equipped.

### EFFECTS OF THE INVENTION

According to the present invention, the simple steps of applying a paste containing a certain metal compound onto a glass substrate comprising an alkali metal component and an ultraviolet ray-absorbing component and of heat-treating the resulting substrate in the air or other similar environment, provide a desired portion of the glass substrate with an area with a different refractive index from that of the substrate or a refractive index distribution, thereby producing an optical element utilizing such difference or distribution of the refractive index. The present invention not only simplifies a process and an optical design but also reduces costs greatly for the purpose of producing a distributed refractive index-type optical element having an ultraviolet ray-absorbing ability.

### BRIEF DESCRIPTION OF THE DRAWINGS

Fig. 1 shows the refractive index distribution in the depth direction (of the circle center) of a distributed refractive index-type micro lens produced by Example 1.
Fig. 2 is a diagram showing the paste patterning in the production of a distributed refractive index-type micro lens array according to Example 2. The diameter of an applied circle is 60µm, and a patterning interval of circles is 150µm.
Fig. 3 is a graph showing the curve of the transmittance rate (the relationship between the wavelength and the transmittance rate) of a distributed refractive index-type micro lens array produced according to Example 2.
Fig. 4 is a graph showing the curve of the transmittance rate (the relationship between the wavelength and the transmittance rate) of a distributed refractive index-type micro lens array produced according to Example 3.

### BEST MODE FOR CARRYING OUT THE INVENTION

The following examples Illustrate the present invention in more detail but should not be construed to limit the scope of the invention.

### Example 1: Production of Distributed Refractive Index-Type Micro Lens

The glass comprising SiO₂: 68 weight %, CaO: 12 weight %, Na₂O: 14 weight %, K₂O: 1 weight %, Al₂O₃: 1.5 weight %, MgO: 2.5 weight % and a cerium ion: 1 weight % was processed into a glass substrate of 10mm in length, 10mm in width and 1mm in thickness, and the surface of the substrate was washed.

A paste comprising AgNO₃: 25 weight %, NaNO₃: 40 weight %, acrylic resin: 15 weight %, cellulose resin: 15 weight % and terpineol: 5 weight % (composed of 20 parts by weight of an organic solvent, 120 parts by weight of resin components and 160 parts by weight of an additive per 100 parts by weight of a silver compound) is applied in circles (500µm in diameter) by dropping it trough an injector onto one side of the glass substrate. The thickness of the paste was 1mm.

Then, the paste-applied glass substrate was dried at a temperature of 200°C for one hour and heat-treated in the air at 300°C for 12 hours.

The measurement using an EDX (energy distribution X ray analyzer) confirmed that silver was distributed in circles on the heat-treated sample.

The measurement of the ultraviolet transmittance rate of the micro lens center (where silver was diffused) showed that such rate was almost the same as that of the glass substrate portion (where silver was not distributed).

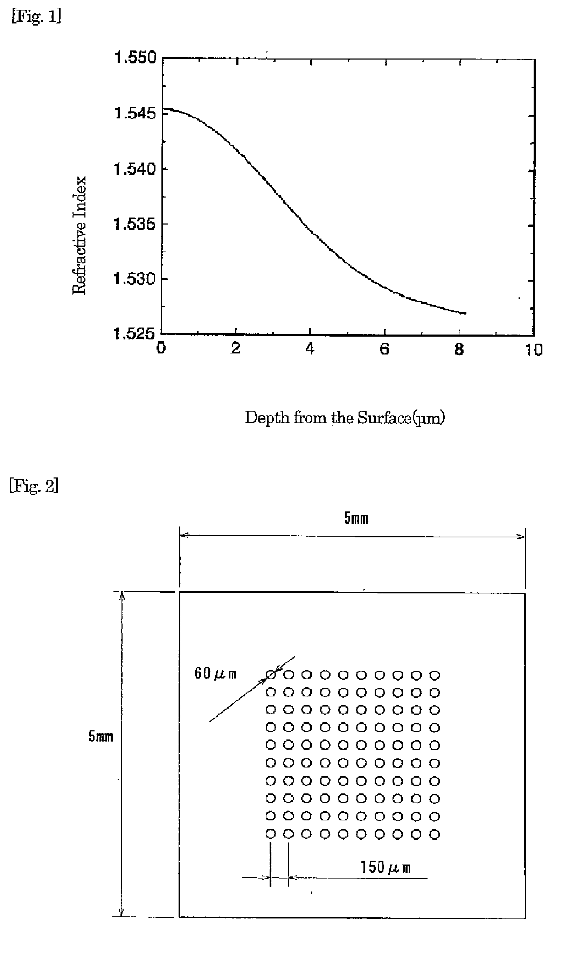

The inspection of the refractive index distribution in the depth direction of the glass substrate proved that the difference in the index of refraction from the glass substrate increased at maximum by approximately 2×10 ⁻² and that the refraction index was distributed up to about 8µm from the surface of the center of an applied circle. The refractive index distribution in the depth direction (of the circle center) is shown in Fig. 1.

### Example 2: Production of Distributed Refractive Index-Type Micro Lens Array

The glass comprising SiO₂: 57.6 weight %, B₂O₃: 20 weight %, Al₂O₃: 3 weight %, Na₂O: 10 weight %, K₂O: 3 weight %, ZnO: 5 weight %, ZrO₂: 0.5 weight %, CuBr: 0.67 weight % and CuI: 0.23 weight % was processed into a glass substrate of 5mm in length, 5mm in width and 1mm in thickness, and the surface of the substrate was washed.

A paste comprising AgNO₃: 25 weight %, NaNO₃: 40 weight %, acrylic resin: 15 weight %, cellulose resin: 15 weight % and terpineol: 5 weight % (composed of 20 parts by weight of an organic solvent, 120 parts by weight of resin components and 160 parts by weight of an additive per 100 parts by weight of a silver compound; degree of viscosity at normal temperature: 10cP) is applied in circles (60µm in diameter) onto one side of the glass substrate by an inkjet method. The application was done at 10×10 points (100 points in total) with a patterning interval of 150µm (an interval between the center of a circle and that of an adjacent circle). The thickness of the paste was 1mm. The paste patterning is illustrated in Fig. 2.

Then, the paste-applied glass substrate was dried at a temperature of 200°C for one hour and heat-treated in the air at 300°C for 6 hours,

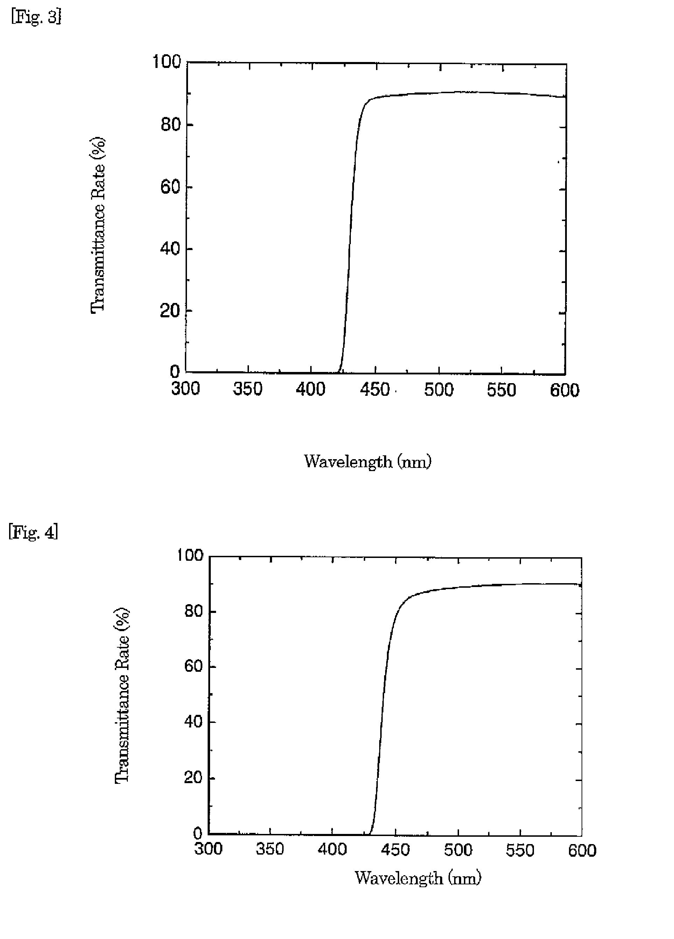

The measurement by an EDX (energy distribution X ray analyzer) confirmed that silver was distributed in circles on the heat-treated sample. The measurement of the ultraviolet transmittance rate of the center of a micro lens (where silver was diffused) showed that such rate was almost the same as that of the glass substrate portion (where silver was not distributed). The transmittance rate curve of the center of a micro lens is shown in Fig. 3.

The inspection of the refractive index distribution in the depth direction of the glass substrate proved that the difference in the index of refraction from the glass substrate increased at maximum by approximately 5×10⁻² and that the refraction index was distributed up to around 15µm from the surface of the center of an applied circle.

When He-Ne laser (2mm in laser diameter) was irradiated on the produced micro lens array from the vertical direction to the glass substrate, it was proved that the laser was concentrated by each lens of the array.

### Example 3: Production of Distributed Refractive Index-Type Micro Lens Array

The glass comprising SiO₂: 57.6 weight %, B₂O₃: 20 weight %, Al₂O₃: 3 weight %, Na₂O : 10 weight %, F₂O: 3 weight %, ZnO: 5 weight %, ZrO₂: 0.5 weight %, CuBr: 0.67 weight % and CuI: 0.23 weight % was processed into a glass substrate of 10mm in length, 10mm in width and 1mm in thickness, and the surface of the substrate was washed.

A paste comprising AgNO₃: 25 weight %, NaN₃: 40 weight %, acrylic resin: 15 weight %, cellulose resin: 15 weight % and terpineol: 5 weight % (made up of 20 parts by weight of an organic solvent, 120 parts by weight of resin components and 160 parts by weight of an additive per 100 parts by weight of a silver compound; degree of viscosity at normal temperature: 10cP) is applied in circles (60pm in diameter) onto one side of the glass substrate by an inkjet method. The application was done at 20×20 points (400 points in total) with a patterning interval of 150µm (an interval between te center of a circle and that of an adjacent circle).

Then, the paste-applied glass substrate was dried at a temperature of 200°C for one hour and heat-treated in the air at 300°C for 6 hours.

The measurement by an EDX (energy distribution X ray analyzer) confirmed that silver was distributed in circles on the heat-treated sample. The measurement of the ultraviolet transmittance rate of the center of a micro lens (where silver was diffused) revealed that the rate was almost the same as that of the glass substrate portion (where silver was not distributed). The transmittance rate curve of the center of a micro lens is shown in Fig. 4.

The inspection of the refractive index distribution in the depth direction of the glass substrate proved that the difference in the index of refraction from the glass substrate increased at maximum by approximately 5×10 ^{- 2} and that the refraction index was distributed up to around 13µm from the surface of the center of an applied circle.

When He-Ne laser (2mm in laser diameter) was irradiated on the produced micro lens array from the vertical direction to the glass substrate, it was ascertained that the laser was concentrated by each lens of the array.

## Claims

1. A method for producing a distributed refractive index-type optical element having an ultraviolet ray-absorbing ability, which comprises of the steps of: applying a paste comprising at least one compound selected from the group consisting of a lithium compound, a potassium compound, a rubidium compound, a cesium compound, a silver compound, a copper compound and a thallium compound, an organic resin and an organic solvent onto a glass substrate comprising an alkali metal component and an ultraviolet ray-absorbing component as glass constituent components; and heat-treating the resulting substrate at a temperature lower than the softening point of the glass substrate.

2. A production method, according to claim 1, wherein the said glass substrate contains as the said ultraviolet ray-absorbing component(s) 0.01 weight % or more of at least one substance selected from the group consisting of a cerium ion, a titanium ion, chalcogenide cadmium, chalcogenide zinc, copper halide and silver.

3. A production method, according to claim 1, wherein the said glass substrate is silicate glass, borosilicate glass, phosphate glass or fluorophosphate glass which contains 2 weight % or more of the said alkali metal component on an oxide basis and 0.05 weight % or more of at least one substance selected from the group consisting of a cerium ion, a titanium ion, chalcogenide cadmium, chalcogenide zinc, copper halide and silver.

4. A production method, according to claim 1, wherein the said glass substrate comprises SiO₂: 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance chosen from the group made up of MgO, CaO, SrO, BaO and ZnO: 1-15 weight %, at least one substance selected from the group comprising PbO, Nb₂O₅, ZrO₂, La₂O₃, Y₂O₃, Ta₂O₃ and Gd₂O₃: 10 weight % or less, Sb₂O₃ and/or AS₂O₃: 5 weight % or less. SnO₂: 5 weight % or less, copper halide(I): 0.01-10 weight % and silver: 1 weight % or less as a metal mass.

5. A production method, according to claim 1, wherein the said glass substrate consists of SiC₂: 20-85 weight %, B₂O₃: 2-75 weight %, Al₂O₃: 10 weight % or less, at least one substance selected from the group consisting of Li₂O, Na₂O, K₂O, Rb₂O and Cs₂O: 2-30 weight %, at least one substance selected from the group comprising MgO, CaO, SrO, BaO and ZnO: 1-15 weight %, at least one substance chosen from the group consisting of PbO, Nb₂O₅, ZrO₂, La₂O₃, Y₂O₃, Ta₂O₃ and Gd₂O₃: 10 weight % or less, Sb₂O₃ and/or As₂O₃: 5 weight % or less, SnO₂: 5 weight % or less, CuBr: 0.005-7 weight % and CuI: 0.005-7 weight %, provided that the total weight percent of CuBr and CuI is 0.01-10, and silver: 1 weight % or less as a metal mass.

6. A distributed refractive index-type optical element having an ultraviolet ray-absorbing ability, which is provided by any of the methods described in claims 1-5.

7. A distributed refractive index-type optical element, according to claim 6, which is used for liquid crystal protection or light concentration.
